# EUROPÄISCHE PATENTANMELDUNG

(11) **EP 2 549 614 A1**
(43) Veröffentlichungstag der Anmeldung: **23.01.2013**
(21) Anmeldenummer: 11174845.5
(22) Anmeldetag: 21.07.2011
(51) Int. Cl.: H02J 3/18

(54) **Ermittlung des Gleichstromanteils in Blindleistungskompensatoren mit Mulitlevel-Umrichter**

(71) Anmelder: Siemens Aktiengesellschaft, 80333 München (DE)
(72) Erfinder: Hörger, Wolfgang, 91353 Hausen (DE); Hoffmann, Reinhard, 91054 Erlangen (DE)

(57) **Zusammenfassung**

Ein Wechselstrompfad (10) ist an ein Wechselspannungsnetz (7) angeschlossen, in dem mit einer Netzfrequenz eine Wechselspannung (U) oszilliert. In dem Wechselstrompfad (10) ist mindestens eine Drossel (11) angeordnet, der mindestens eine elektrische Speicherschaltung (13) in Reihe geschaltet ist. Die Speicherschaltung (13) umfasst mindestens einen Kondensator (14) und eine dem Kondensator (14) zugeordnete Schalteinrichtung (15). Die Schalteinrichtung (15) wird derart angesteuert, dass ein Ladezustand des Kondensators (14) mit einem ganzzahligen Vielfachen der Netzfrequenz oszilliert. Die über dem Kondensator (14) abfallende Spannung (UK) wird erfasst und mit mindestens einem ganzzahligen Vielfachen der Netzfrequenz gefiltert. Anhand der gefilterten Spannung (UK) wird ein Gleichstromanteil (IDC) eines in dem Wechselstrompfad (10) fließenden Gesamtstromes (I), der zusätzlich einen Wechselstromanteil aufweist, ermittelt. Anhand des ermittelten Gleichstromanteils (IDC) werden weitere Maßnahmen ergriffen.

## Beschreibung

Die vorliegende Erfindung betrifft ein Ermittlungsverfahren für einen Gleichstromanteil eines in einem Wechselstrompfad fließenden Gesamtstromes, der zusätzlich zum Gleichstromanteil einen Wechselstromanteil aufweist,
- wobei der Wechselstrompfad an ein Wechselspannungsnetz angeschlossen ist, in dem mit einer Netzfrequenz eine Wechselspannung oszilliert,
- in dem Wechselstrompfad mindestens eine Drossel angeordnet ist,
- wobei der mindestens einen Drossel mindestens eine elektrische Speicherschaltung in Reihe geschaltet ist,
- wobei die Speicherschaltung mindestens einen Kondensator und eine dem Kondensator zugeordnete Schalteinrichtung umfasst.

Die vorliegende Erfindung betrifft weiterhin ein Computerprogramm, das Maschinencode umfasst, der von einer Ermittlungseinrichtung unmittelbar abarbeitbar ist und dessen Abarbeitung durch die Ermittlungseinrichtung bewirkt, dass die Ermittlungseinrichtung im Betrieb ein derartiges Ermittlungsverfahren ausführt.

Die vorliegende Erfindung betrifft weiterhin eine Ermittlungseinrichtung, wobei die Ermittlungseinrichtung derart programmiert ist, dass sie im Betrieb ein derartiges Ermittlungsverfahren ausführt.

Die oben genannten Gegenstände sind beispielsweise aus der EP 2 202 863 A1 bekannt.

Wechselspannungspfade, wie sie obenstehend erläutert wurden, werden beispielsweise als Blindleistungskompensatoren für zeitlich instationäre Lasten verwendet. Ein typisches Beispiel einer zeitlich instationären Last ist ein elektrischer Lichtbogenofen.

Der im Wechselspannungspfad fließende Gesamtstrom weist stets einen Wechselstromanteil auf. Der Wechselstromanteil ist der Nutzteil des Gesamtstroms. Zusätzlich zum Wechselstromanteil kann der Gesamtstrom jedoch einen Gleichstromanteil aufweisen. Das Vorhandensein des Gleichstromanteils ist aus verschiedenen Gründen unerwünscht. Beispielsweise muss die Schalteinrichtung derart ausgelegt sein, dass ihre Stromtragfähigkeit der des Wechselstromanteils zuzüglich des Gleichstromanteils entspricht. Weiterhin können auch in anderen an das Wechselspannungsnetz angeschlossenen Komponenten - beispielsweise in Transformatoren - negative Effekte auftreten, beispielsweise magnetische Sättigungserscheinungen.

Es ist möglich, den Wechselstrompfad und die an das Wechselspannungsnetz angeschlossenen weiteren Komponenten derart auszulegen, dass sie den Gesamtstrom verkraften. Dies führt jedoch zu einer Überdimensionierung der Schalteinrichtung und ggf. der weiteren Komponenten.

Weiterhin ist bekannt, im Wechselstrompfad hochgenaue Strommessglieder anzuordnen, mittels derer nicht nur der Wechselstromanteil, sondern auch der Gleichstromanteil mit einem sehr geringen Offset erfassbar ist. Ein Beispiel derartiger hochgenauer Strommessglieder sind Stromwandler, die nach dem flux-gate-Prinzip arbeiten. Diese Lösung führt zwar zu guten Ergebnissen, ist jedoch teuer. Weiterhin kann diese Lösung dynamische Nachteile aufweisen.

Weiterhin ist bekannt, einfachere Strommessglieder zu verwenden, im stromlosen Betrieb des Wechselstrompfades den Gleichstromoffset des Strommessgliedes zu erfassen und den erfassten Offset im Rahmen der Ermittlung der Ansteuerung der Schalteinrichtung zu verwenden. Diese Lösung hat den Nachteil, dass die Wechselstrompfade in der Praxis oftmals über längere Zeit - beispielsweise Tage oder Wochen, unter Umständen sogar Monate - kontinuierlich in Betrieb sind und daher insbesondere ein Driften des Gleichstromoffsets nicht erfassbar ist.

Die Aufgabe der vorliegenden Erfindung besteht darin, Möglichkeiten zu schaffen, mittels derer auf einfache Weise im laufenden Betrieb des Wechselstrompfades der Gleichstromanteil des Gesamtstroms ermittelbar ist, ohne hochgenau arbeitende Strommessglieder zu benötigen.

Die Aufgabe wird durch ein Ermittlungsverfahren mit den Merkmalen des Anspruchs 1 gelöst. Ausgestaltungen des erfindungsgemäßen Ermittlungsverfahrens sind Gegenstand der abhängigen Ansprüche 2 bis 7.

Erfindungsgemäß ist vorgesehen, ein Ermittlungsverfahren der eingangs genannten Art dadurch auszugestalten,
- dass in einem Betriebszustand des Wechselstrompfades, in dem die Schalteinrichtung derart angesteuert wird, dass ein Ladezustand des Kondensators mit einem ganzzahligen Vielfachen der Netzfrequenz oszilliert, die über dem Kondensator abfallende Spannung erfasst wird,
- dass die erfasste Spannung mit mindestens einem ganzzahligen Vielfachen der Netzfrequenz gefiltert wird,
- dass anhand der gefilterten Spannung der Gleichstromanteil ermittelt wird und
- dass anhand des ermittelten Gleichstromanteils weitere Maßnahmen ergriffen werden.

Die weiteren Maßnahmen können nach Bedarf bestimmt sein. Beispielsweise können die weiteren Maßnahmen eine Anzeige des ermittelten Gleichstromanteils und/oder einen Vergleich des ermittelten Gleichstromanteils mit einem maximal zulässigen Gleichstromanteil nebst Ausgabe einer Alarmmeldung und/oder Ergreifen einer Alarmreaktion bei Überschreiten des maximal zulässigen Gleichstromanteils umfassen.

In diesem Fall ist möglich, dass eine Vorgabe eines Ermittlungsbefehls abgewartet wird und dass die Ausführung des Ermittlungsverfahrens erst durch die Vorgabe des Ermittlungsbefehls ausgelöst wird. Alternativ ist es möglich, dass überprüft wird, ob eine zeitlich instationäre Last an das Wechselspannungsnetz angeschlossen ist, und dass die Ausführung des Ermittlungsverfahrens ausgesetzt wird, solange die zeitlich instationäre Last an das Wechselspannungsnetz angeschlossen ist.

Die weiteren Maßnahmen können alternativ oder zusätzlich eine Speicherung des ermittelten Gleichstromanteils als Gleichstromoffset umfassen. Der gespeicherte Gleichstromoffset kann in diesem Fall im Rahmen der Ermittlung einer Ansteuerung der Schalteinrichtung berücksichtigt werden.

Im letztgenannten Fall wird bei Vorgabe des Ermittlungsbefehls oder bei Trennen der zeitlich instationären Last von dem Wechselspannungsnetz das Ermittlungsverfahren unter Berücksichtigung eines zuvor gespeicherten Gleichstromoffsets ausgeführt. Ab dem Speichern des neu ermittelten Gleichstromoffsets wird sodann der neu gespeicherte Gleichstromoffset im Rahmen der Ermittlung der Ansteuerung der Schalteinrichtung verwendet.

Die Aufgabe wird weiterhin durch ein Computerprogramm der eingangs genannten Art gelöst. Das Computerprogramm ist in diesem Fall derart ausgestaltet, dass die Ermittlungseinrichtung im Betrieb ein erfindungsgemäßes Ermittlungsverfahren ausführt.

Die Aufgabe wird weiterhin durch eine Ermittlungseinrichtung gelöst, die derart programmiert ist, dass sie im Betrieb ein erfindungsgemäßes Ermittlungsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen
- FIG 1: eine elektrische Anlage,
- FIG 2: einen Blindleistungskompensator,
- FIG 3: eine elektrische Speicherschaltung,
- FIG 4: ein Ablaufdiagramm,
- FIG 5 bis 10: je einen Spannungsverlauf und einen zugehörigen Stromverlauf,
- FIG 11: ein Ablaufdiagramm und
- FIG 12: eine alternative elektrische Speicherschaltung.

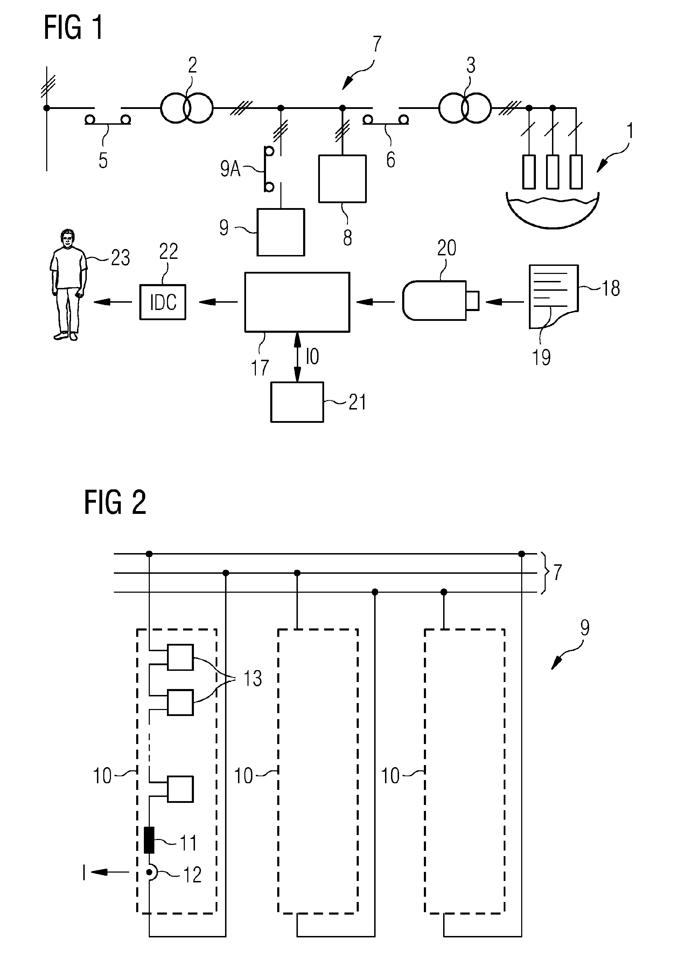

Gemäß FIG 1 umfasst eine elektrische Anlage als Nutzteil einen Lichtbogenofen 1. Lichtbogenöfen 1 sind im Betrieb zeitlich instationäre Lasten. Der Lichtbogenofen 1 wird über einen Netztransformator 2 und einen Ofentransformator 3 aus einem Versorgungsnetz 4 mit elektrischer Energie versorgt. Dem Netztransformator 2 ist eine Schalteinrichtung 5 vorgeordnet, die nachfolgend als Hauptschalter 5 bezeichnet wird. Dem Ofentransformator 3 ist eine Schalteinrichtung 6 vorgeordnet, die nachfolgend als Lastschalter 6 bezeichnet wird. Der Bereich zwischen dem Netztransformator 2 und dem Lastschalter 6 entspricht einem Wechselspannungsnetz 7 im Sinne der vorliegenden Erfindung. Das Versorgungsnetz 4 und der Lichtbogenofen 1 werden in der Regel mit Drehstrom betrieben, also mehrphasigem - in der Regel dreiphasigem - Wechselstrom.

An das Wechselspannungsnetz 7 ist - zusätzlich zum Lichtbogenofen 1 - mindestens ein Filterkreis 8 angeschlossen. Der Filterkreis 8 dient der Filterung von Oberschwingungen der im Wechselspannungsnetz 7 fließenden Ströme. Weiterhin ist an das Wechselspannungsnetz 7 über einen weiteren Schalter 9A - nachfolgend als Kompensatorschalter 9A bezeichnet - ein Blindleistungskompensator 9 angeschlossen. Der Blindleistungskompensator 9 dient der Kompensation von Blindleistungen, so dass der Netztransformator 2 (nach Möglichkeit) ausschließlich Wirkleistung in das Wechselspannungsnetz 7 einspeist.

Der Blindleistungskompensator 9 weist gemäß FIG 2 mehrere Stränge 10 auf. Die Stränge 10 sind untereinander in der Regel gleich aufgebaut. Sie sind gemäß FIG 2 mit je zwei Phasen des Wechselspannungsnetzes 7 verbunden. Alternativ könnten sie mit je einer Phase und einem gemeinsamen Sternpunkt verbunden sein, der seinerseits direkt oder indirekt mit einem gemeinsamen Nullleiter des Wechselspannungsnetzes 7 verbunden sein kann. Jeder Strang 10 entspricht einem Wechselstrompfad 10 im Sinne der vorliegenden Erfindung.

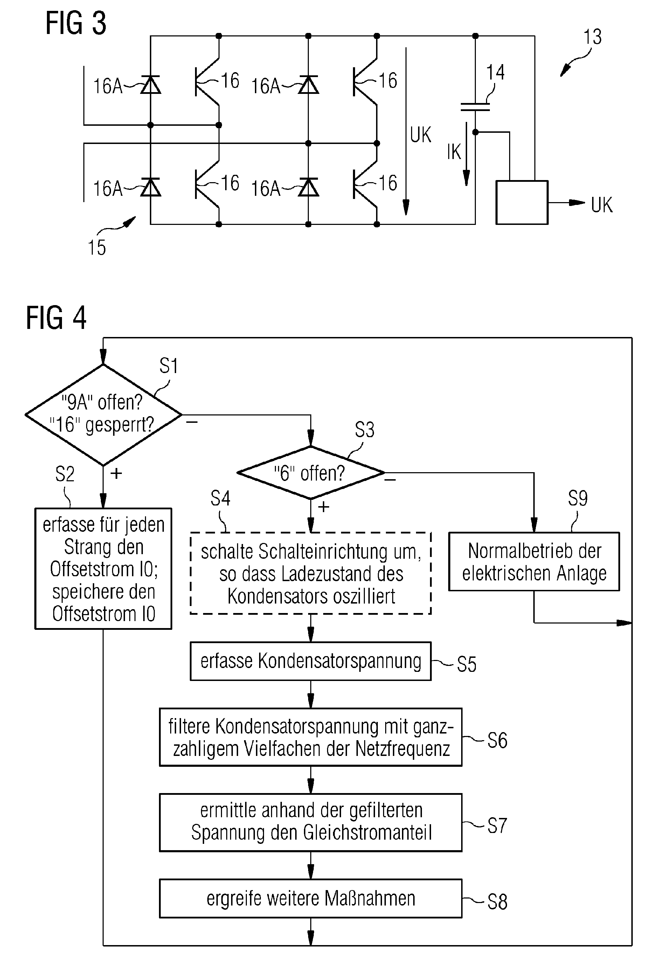

Im jeweiligen Strang 10 sind eine Drossel 11 und ein Stromsensor 12 angeordnet. Weiterhin ist der Drossel 11 eine Anzahl von elektrischen Speicherschaltungen 13 in Reihe geschaltet. Die Anzahl an Speicherschaltungen 13 kann nach Bedarf bestimmt sein. Minimal ist pro Strang 10 eine einzige Speicherschaltung 13 vorhanden. Alternativ können, wie in FIG 2 dargestellt, mehrere derartige Speicherschaltungen 13 in Reihe geschaltet sein. Die elektrischen Speicherschaltungen 13 umfassen gemäß FIG 3 mindestens einen Kondensator 14 und eine Schalteinrichtung 15. Die Schalteinrichtung 15 ist dem Kondensator 14 zugeordnet. Sie weist mehrere Schaltelemente 16 auf. Den Schaltelementen 16 sind in der Regel Freilaufdioden 16A parallel zugeschaltet.

Die elektrische Anlage wird gemäß FIG 1 von einer Steuereinrichtung 17 gesteuert und überwacht. Das Steuerverfahren der elektrischen Anlage ist als solches nicht Gegenstand der vorliegenden Erfindung. Im Rahmen der vorliegenden Erfindung kommt es mehr auf die Überwachung der elektrischen Anlage an. Im Rahmen der Überwachung der elektrischen Anlage kommt es weiterhin nicht auf das Ausgeben von Steuersignalen an die elektrische Anlage an, sondern nur auf die Erfassung von Zuständen der elektrischen Anlage und deren rechentechnische Verarbeitung und Aufbereitung. Im Rahmen der vorliegenden Erfindung kommt es daher darauf an, dass die Steuereinrichtung 17 (unter anderem) die Funktion einer Ermittlungseinrichtung umfasst.

Die Steuereinrichtung 17 ist mit einem Computerprogramm 18 programmiert. Das Computerprogramm 18 umfasst Maschinencode 19, der von der Steuereinrichtung 17 unmittelbar abarbeitbar ist. Das Computerprogramm 18 kann der Steuereinrichtung 17 beispielsweise über einen mobilen Datenträger 20 zugeführt worden sein, auf dem das Computerprogramm 18 in (ausschließlich) maschinenlesbarer Form gespeichert ist. Das Abarbeiten des Maschinencodes 19 durch die Steuereinrichtung 17 bewirkt, dass die Steuereinrichtung 17 (unter anderem) ein Ermittlungsverfahren ausführt, das nachfolgend in Verbindung mit FIG 4 näher erläutert wird.

Gemäß FIG 4 prüft die Steuereinrichtung 17 in einem Schritt S1, ob der Kompensatorschalter 9A geöffnet ist und die Schaltelemente 16 gesperrt sind. In diesem Fall ist der tatsächlich in den Wechselstrompfaden 10 fließende Strom I 0. In diesem Fall kann daher in einem Schritt S2 für jeden Strang 10 der Messwert des jeweiligen Stromsensors 12 erfasst werden und als Messfehler (Gleichstromoffset 10) in einem Speicher 21 gespeichert werden. Der gespeicherte Gleichstromoffset 10 kann in anderen Betriebszuständen der elektrischen Anlage berücksichtigt werden.

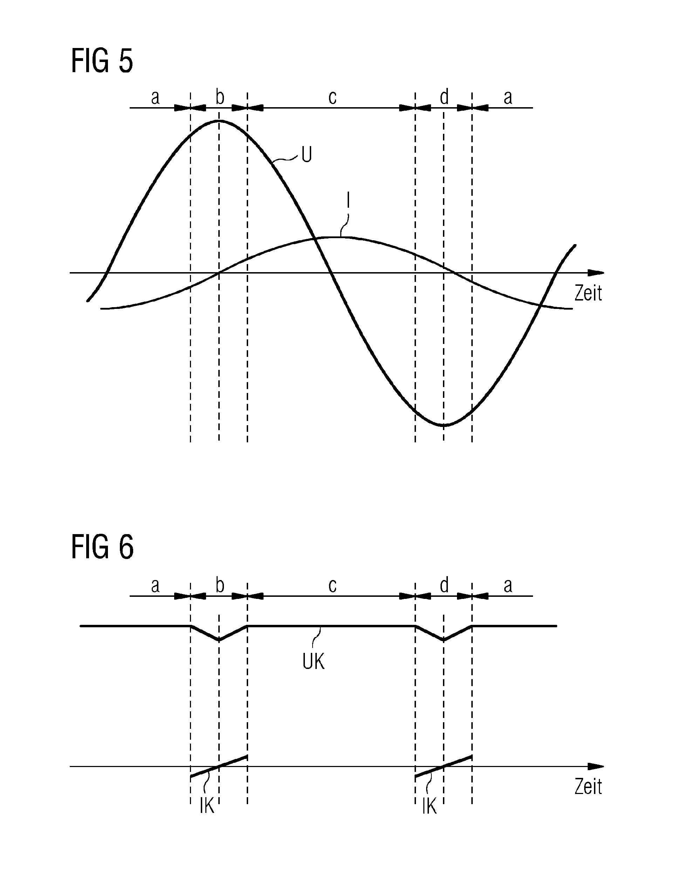

Wenn der Kompensatorschalter 9A geschlossen ist, geht die Steuereinrichtung 17 zu einem Schritt S3 über. Im Schritt S3 prüft die Steuereinrichtung 17, ob der Lastschalter 6 geöffnet ist oder der Strom in den Ofentransformator 3 0 ist. Wenn der Lastschalter 6 geöffnet ist, oszilliert im Wechselspannungsnetz 7 - selbstverständlich mit der Netzfrequenz von beispielsweise 50 Hz oder 60 Hz - eine Wechselspannung. FIG 5 zeigt den Verlauf der an einem der Stränge 10 anstehenden Spannung U, im vorliegenden Fall also die Differenz zweier Phasenspannungen. Im jeweiligen Strang 10 fließt auch ein Strom I. Der Strom I ist ebenfalls in FIG 5 dargestellt. Er dient in diesem Betriebszustand der Kompensation des Filterstroms, d. h. des im Filterkreis 8 fließenden Stroms.

Der Lichtbogenofen 1 hingegen - d. h. die Last 1 - ist vom Wechselspannungsnetz 7 getrennt. Der Zustand des Wechselspannungsnetzes 7 ist daher stabil. In diesem Zustand der elektrischen Anlage wird, implementiert durch Schritte S4 bis S8 von FIG 4, das erfindungsgemäße Ermittlungsverfahren ausgeführt.

Die Schaltelemente 16 der Schalteinrichtung 15 der elektrischen Speicherschaltung 13 sind in diesem Betriebszustand der elektrischen Anlage - also in dem Fall, dass die Last 1 vom Wechselspannungsnetz 7 getrennt ist - derart gesteuert, dass auch durch den jeweiligen Strang 10 der Strom I fließt. FIG 5 zeigt, wie bereits erwähnt, für einen der Stränge 10 den in diesem Strang 10 fließenden Strom I. FIG 5 zeigt hierbei den tatsächlich fließenden Strom I, also nicht den mittels des entsprechenden Stromsensors 12 erfassten Messwert.

Damit der Stromfluss möglich ist, werden pro elektrischer Speicherschaltung 13 die Schaltelemente 16 der entsprechenden Schalteinrichtung 15 (mit Ausnahme von unvermeidlichen Umschaltzeiten) derart angesteuert, dass jeweils zwei der Schaltelemente 16 geöffnet und die beiden anderen Schaltelemente 16 geschlossen sind. Hierbei ist möglich,
- dass die beiden in FIG 3 oberen Schaltelemente 16 geschlossen sind,
- dass die beiden in FIG 3 unteren Schaltelemente 16 geschlossen sind,
- dass die Schaltelemente 16, die in FIG 3 links oben und rechts unten gezeichnet sind, geschlossen sind und
- dass die Schaltelemente 16, die in FIG 3 links unten und rechts oben gezeichnet sind, geschlossen sind.

Die Schaltzustände der Schalteinrichtung 15 sind nicht statisch. Vielmehr wird - siehe den Schritt S4 in FIG 4 - jede Schalteinrichtung 15 während einer Oszillationsperiode der Wechselspannung U mehrmals umgeschaltet. Die Ansteuerung der Schaltelemente 16 erfolgt derart, dass ein Ladezustand des entsprechenden Kondensators 14 mit einem ganzzahligen Vielfachen der Netzfrequenz oszilliert. Das Ansteuern der Schaltelemente 16 erfolgt durch die Steuereinrichtung 17 im Rahmen ihrer Funktion als Steuereinrichtung, nicht im Rahmen ihrer Funktion als Ermittlungseinrichtung. Aus diesem Grund ist der Schritt S4 in FIG 4 gestrichelt dargestellt.

Das ganzzahlige Vielfache kann nach Bedarf bestimmt sein. Im einfachsten Fall handelt es sich um das niedrigste ganzzahlige Vielfache, so dass der Ladezustand des entsprechenden Kondensators 14 mit der Netzfrequenz oszilliert. FIG 5 und auch FIG 6 zeigt den einfachen Fall, in dem pro Oszillationsperiode der Wechselspannung U vier Schaltvorgänge erfolgen. Die entsprechenden Zeitabschnitte a bis d sind gemäß FIG 6 wie folgt:
- In den Zeitabschnitten a und c ist der Kondensator 14 vom jeweiligen Strang 10 abgekoppelt. Es sind entweder die beiden in FIG 3 oberen oder die beiden in FIG 3 unteren Schaltelemente 16 geschlossen.
- Im Zeitabschnitt b sind die Schaltelemente 16 geschlossen, die in FIG 3 links oben und rechts unten eingezeichnet sind.
- Im Zeitabschnitt d sind die Schaltelemente 16 geschlossen, die in FIG 3 links unten und rechts oben eingezeichnet sind.

Gemäß dem Beispiel von FIG 6 sind die Zeitabschnitte a und c symmetrisch um die Nulldurchgänge der im Wechselspannungsnetz 7 oszillierenden Wechselspannung U angeordnet. Weiterhin sind gemäß dem Beispiel von FIG 6 die Zeitabschnitte a und c gleich groß. Demzufolge sind gemäß dem Beispiel von FIG 6 auch die Zeitabschnitte b und d gleich groß. Weiterhin sind sie symmetrisch um die Spannungsmaxima der im Wechselspannungsnetz 7 oszillierenden Wechselspannung U angeordnet.

Die FIG 5 und 6 zeigen den Fall, das der im Wechselstrompfad 10 (d. h. im jeweiligen Strang 10) fließende Gesamtstrom I keinen Gleichstromanteil aufweist (bzw. der Gleichstromanteil den Wert Null hat). Dies stellt den Idealfall dar. In diesem Fall oszilliert der Ladezustand des Kondensators 14 (d. h. die über dem Kondensator 14 abfallende Spannung UK) gemäß FIG 6 mit der doppelten Netzfrequenz (Oberschwingungen der doppelten Netzfrequenz mit eingeschlossen). FIG 6 zeigt weiterhin den durch den Kondensator 14 fließenden Strom IK, der mit dem in der FIG 6 gezeigten Spannungsverlauf korrespondiert.

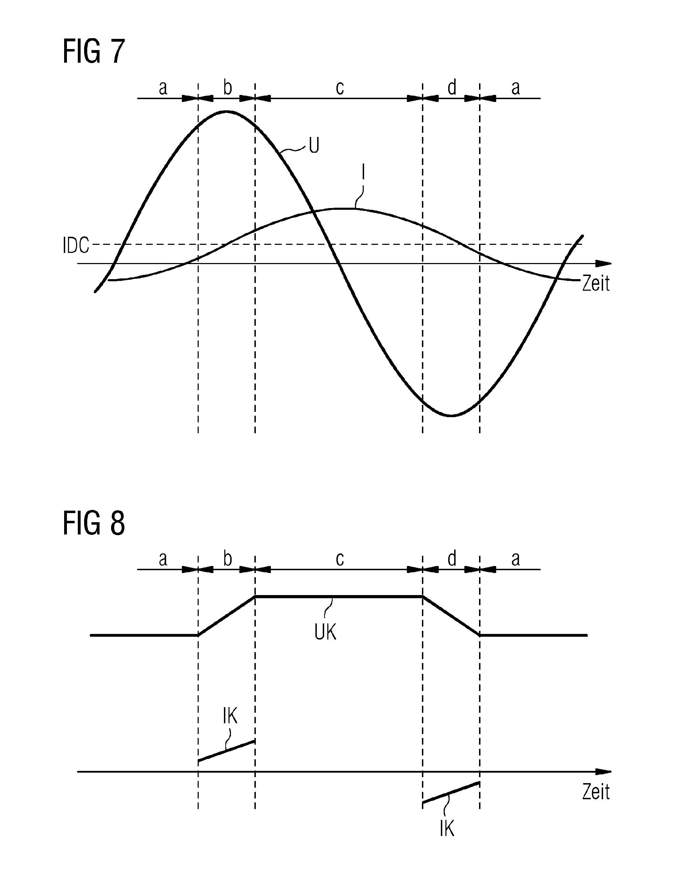

Die FIG 7 und 8 zeigen zu den FIG 5 und 6 analoge Ausgestaltungen. Im Gegensatz zu den FIG 5 und 6 ist bei den FIG 7 und 8 jedoch ein Gleichstromanteil IDC vorhanden, der größer als Null ist. In diesem Fall oszilliert die über dem Kondensator 14 abfallende Spannung UK gemäß FIG 8 nicht mit dem Doppelten der Netzfrequenz, sondern mit der Netzfrequenz selbst (Oberschwingungen der Netzfrequenz mit eingeschlossen). Insbesondere ist die über dem Kondensator 14 abfallende Spannung UK im Zeitabschnitt c größer als im Zeitabschnitt a.

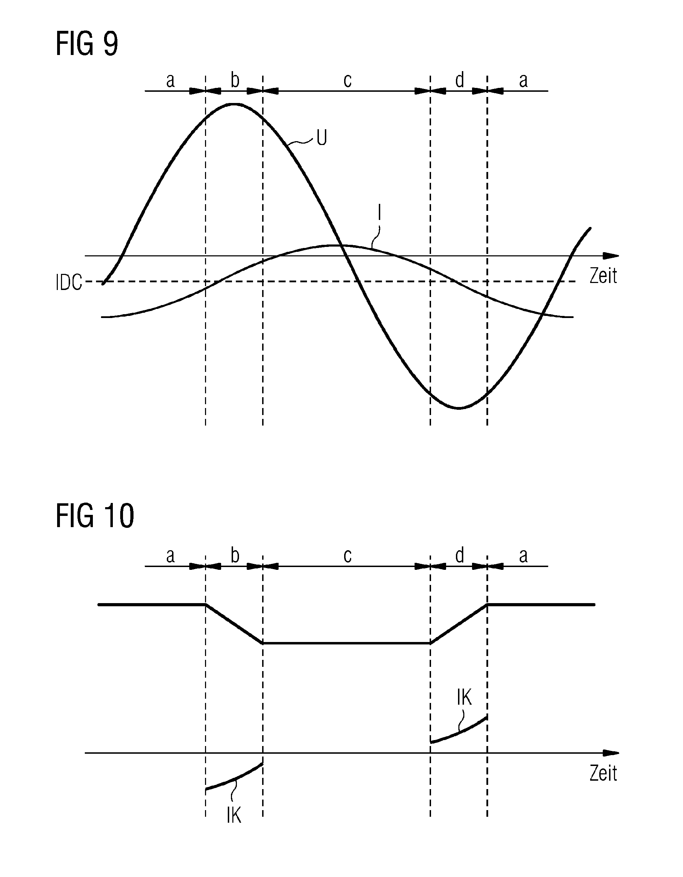

Die FIG 9 und 10 zeigen den zu den FIG 7 und 8 inversen Fall, in welchem ebenfalls ein Gleichstromanteil IDC vorhanden ist, der Gleichstromanteil IDC jedoch kleiner als Null ist. Auch in diesem Fall oszilliert die über dem Kondensator 14 abfallende Spannung UK nicht mit dem Doppelten der Netzfrequenz, sondern mit der Netzfrequenz selbst (Oberschwingungen der Netzfrequenz mit eingeschlossen). In diesem Fall ist jedoch die über dem Kondensator 14 abfallende Spannung UK im Zeitabschnitt c kleiner als im Zeitabschnitt a.

Anhand des zeitlichen Verlaufs der über dem Kondensator 14 abfallenden Spannung UK - genauer: der mit der Netzfrequenz (diesmal ohne Oberschwingungen) oszillierenden Komponente der genannten Spannung UK - ist daher erkennbar, welchen Wert und welches Vorzeichen der Gleichstromanteil IDC aufweist. Die über dem Kondensator 14 abfallende Spannung UK wird daher gemäß FIG 4 im Schritt S5 erfasst und im Schritt S6 gefiltert. Insbesondere erfolgt im Schritt S6 eine Filterung mit der Netzfrequenz bzw. - im allgemeinen Fall - mit einem ganzzahligen Vielfachen der Netzfrequenz. Das ganzzahlige Vielfache kann, je nach Erfordernis, dasselbe oder ein anderes ganzzahliges Vielfaches der Netzfrequenz sein, mit welcher die über dem Kondensator 14 abfallende Spannung UK oszilliert. Unter Umständen kann es erforderlich sein, die über dem Kondensator 14 abfallende Spannung UK mit mehreren Frequenzen parallel zu filtern, beispielsweise mit der Netzfrequenz selbst, dem Dreifachen der Netzfrequenz und dem Sechsfachen der Netzfrequenz. Je nach Lage des Einzelfalls kann es erforderlich sein, zur Filterung ausschließlich ungeradzahlige Vielfache, ausschließlich geradzahlige Vielfache sowohl ungeradzahlige Vielfache als auch geradzahlige Vielfache der Netzfrequenz heranzuziehen.

Im Schritt S7 ermittelt die Steuereinrichtung 17 anhand der gefilterten Spannung den Gleichstromanteil IDC. Die Steuereinrichtung 17 kann hierzu insbesondere Größe und Phasenlage der gefilterten Spannung ermitteln. Im Schritt S8 ergreift die Steuereinrichtung 17 anhand des ermittelten Gleichstromanteils IDC weitere Maßnahmen. Auf diese Maßnahmen wird später näher eingegangen werden.

Falls im Schritt S2 festgestellt wurde, dass der Lastschalter 6 geschlossen ist bzw. im Ofentransformator 3 Strom fließt, ist die Last 1 an das Wechselspannungsnetz 7 angekoppelt. In diesem Fall erfolgt in einem Schritt S9 ein Normalbetrieb der elektrischen Anlage. Im Normalbetrieb wird (unter anderem) der Blindleistungskompensator 9 in Abhängigkeit von den Lastströmen angesteuert, um Blindleistungskomponenten der Lastströme und evtl. auch deren Oberschwingungen zu kompensieren. Im Rahmen der Ansteuerung des Blindleistungskompensators 9 werden unter anderem auch die Gleichstromoffsets 10 der in den Strängen 10 des Blindleistungskompensators 9 angeordneten Stromsensoren 12 berücksichtigt. Der entsprechende Betrieb des Blindleistungskompensators 9 ist Fachleuten allgemein bekannt.

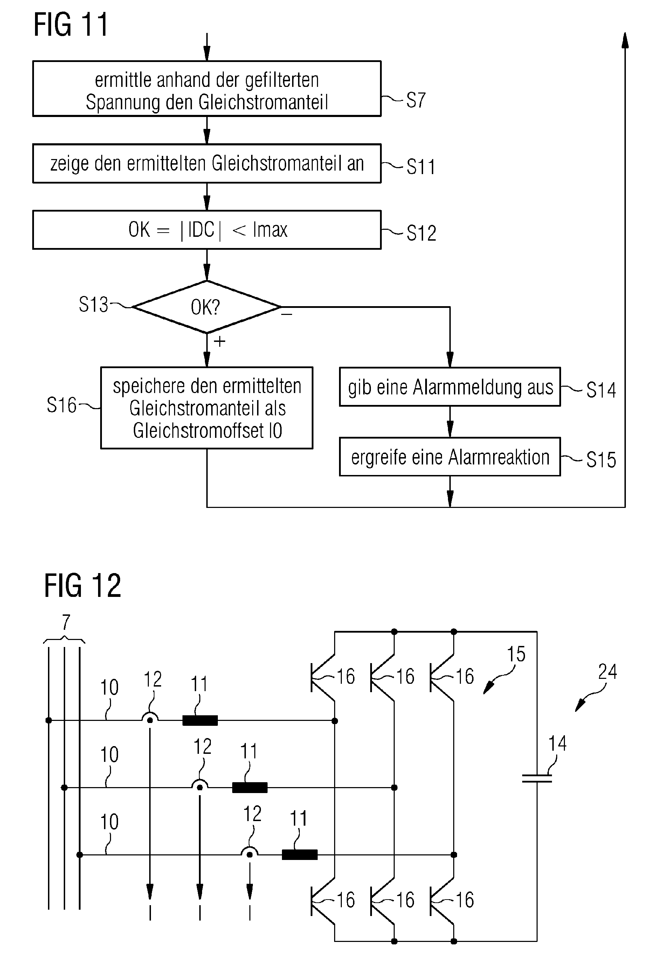

Die weiteren Maßnahmen des Schrittes S8 können nach Bedarf bestimmt sein. In Verbindung mit FIG 11 werden nachstehend mögliche weitere Maßnahmen erläutert. Die in Verbindung mit FIG 11 erläuterten weiteren Maßnahmen können einzeln oder in beliebiger Kombination realisiert sein.

So ist es beispielsweise möglich, in einem Schritt S11 den ermittelten Gleichstromanteil IDC anzuzeigen. Beispielsweise kann eine Ausgabe über ein Sichtgerät 22 erfolgen.

Alternativ oder zusätzlich ist es möglich, den ermittelten Gleichstromanteil IDC (genauer: dessen Betrag) in einem Schritt S12 mit einem maximal zulässigen Gleichstromanteil Imax zu vergleichen und auf diese Weise den Wert einer logischen Variablen OK zu ermitteln. Der Wert der logischen Variablen OK wird in einem Schritt S13 überprüft. Falls erforderlich, werden ein Schritt S14 und/oder ein Schritt S15 ausgeführt. Im Schritt S14 wird eine optische Alarmmeldung an eine Bedienperson 23 der elektrischen Anlage ausgegeben. Alternativ oder zusätzlich kann eine akustische Alarmmeldung ausgelöst werden. Im Schritt S15 wird eine Alarmreaktion ergriffen. Beispielsweise kann ein Abschalten des Hauptschalters 5 oder des Kompensatorschalters 9A ausgelöst werden. Das Abschalten des Hauptschalters 5 oder des Kompensatorschalters 9A kann ggf. zugleich die Ausführung einer Messung der Gleichstromoffsets 10 entsprechend dem Schritt S2 von FIG 4 auslösen.

Weiterhin ist es möglich, dass in einem Schritt S16 ein neuer Wert für den Gleichstromoffset 10 ermittelt wird, der den im Schritt S2 ermittelten Gleichstromoffset 10 ersetzt. In diesem Fall erfolgt im Schritt S16 ein Einspeichern des im Schritt S7 ermittelten Gleichstromanteils IDC als Gleichstromoffset 10 in den Speicher 21.

Der Schritt S16 ist gemäß FIG 11 im JA-Zweig des Schrittes S13 angeordnet. Falls der Schritt S13 (und mit ihm selbstverständlich die Schritte S12, S14 und S15) entfällt, wird der Schritt S16 unbedingt ausgeführt. Es ist weiterhin möglich, den Schritt S16 unbedingt auszuführen, wenn zwar die Schritte S12, S13 und S14 vorhanden sind, der Schritt S15 jedoch entfällt.

Wie bereits erwähnt, wird das erfindungsgemäße Ermittlungsverfahren nur dann ausgeführt, wenn die zeitlich instationäre Last 1 nicht an das Wechselspannungsnetz 7 angeschlossen ist. Wenn die zeitlich instationäre Last 1 hingegen an das Wechselspannungsnetz 7 angeschlossen ist, wird die Ausführung des erfindungsgemäßen Ermittlungsverfahrens ausgesetzt. Um festzustellen, ob die zeitlich instationäre Last 1 an das Wechselspannungsnetz 7 angeschlossen ist oder nicht (Schritt S3 von FIG 4), gibt es im Wesentlichen zwei Möglichkeiten. Zum einen kann die Steuereinrichtung 17 selbsttätig eine entsprechende Überprüfung vornehmen. Beispielsweise können die Lastströme erfasst werden und anhand der Lastströme entschieden werden, ob der Lastschalter 6 geschlossen ist oder nicht. Auch kann die entsprechende Ermittlung anhand eines Soll- oder Istschaltzustands des Lastschalters 6 erfolgen. Im Falle einer selbsttätigen Überprüfung durch die Steuereinrichtung 17 kann beim Trennen der zeitlich instationären Last 1 vom Wechselspannungsnetz 7 automatisch die Ausführung des erfindungsgemäßen Ermittlungsverfahrens ausgelöst werden.

Zum anderen ist es möglich, dass die Steuereinrichtung 17 lediglich abwartet, ob ihr von der Bedienperson 23 ein entsprechender Ermittlungsbefehl vorgegeben wird. In diesem Fall muss selbstverständlich die Bedienperson 23 überprüfen, ob die Last 1 an das Wechselspannungsnetz 7 angeschlossen ist oder nicht.

Die Ermittlung der Steuersignale für die Schalteinrichtungen 15 erfolgt unter Berücksichtigung des Gleichstromoffsets 10, der im Speicher 21 für den entsprechenden Strang 10 abgespeichert ist. Dies gilt sowohl im Rahmen der Schritte S4 bis S8 als auch im Rahmen des Schrittes S9 von FIG 4. Insbesondere können die Umschaltzeitpunkte für die Schaltelemente 16 der Schalteinrichtungen 15 in Abhängigkeit von dem gespeicherten Gleichstromoffset 10 ermittelt werden.

Falls der Schritt S16 vorhanden ist, im Rahmen des erfindungsgemäßen Ermittlungsverfahrens also ein neuer Gleichstromanteil IDC ermittelt wird und dieser Gleichstromanteil IDC als Gleichstromoffset 10 abgespeichert wird, wird ab dem Ausführen des Schrittes S16, also ab dem Speichern des neu ermittelten Gleichstromoffsets 10, der neu abgespeicherte Gleichstromoffset 10 im Rahmen der Ermittlung der Ansteuerung der Schalteinrichtung 15 verwendet.

Obenstehend wurde die Anwendung des erfindungsgemäßen Ermittlungsverfahrens in Verbindung mit einer elektrischen Speicherschaltung 13 erläutert, bei welcher der Kondensator 14 (siehe FIG 3) über die Schalteinrichtung 15 mit genau zwei Leitungen verbindbar ist, so das alternativ die beiden Leitungen kurzgeschlossen sind oder der Kondensator 14 in der einen oder in der anderen Stromflussrichtung zwischen die beiden Leitungen geschaltet ist. Das erfindungsgemäße Ermittlungsverfahren ist jedoch ebenso bei einer elektrischen Speicherschaltung 24 gemäß FIG 12 anwendbar, bei welcher mehr als zwei Eingänge - in der Regel gemäß FIG 12 drei Eingänge - über eine geeignete Anzahl von Schaltelementen 16 mit dem Kondensator 14 abschaltbar sind. Die Freilaufdioden 16A sind in FIG 12 aus Gründen der Übersichtlichkeit nicht mit dargestellt. Jedem der Eingänge ist in diesem Fall eine jeweilige Drossel 11 zugeordnet. Weiterhin ist jedem der Eingänge vorzugsweise ein Stromsensor 12 zugeordnet. Die entsprechende Ausgestaltung der elektrischen Speicherschaltung 24 und deren Betrieb sind Fachleuten allgemein bekannt.

Im Rahmen der Anwendung des erfindungsgemäßen Ermittlungsverfahrens bei einer Speicherschaltung 24 gemäß FIG 12 kann es erforderlich sein, die über dem Kondensator 14 abfallende Spannung UK mit mehr als einem ganzzahligen Vielfachen der Netzfrequenz zu filtern und den Gleichstromanteil IDC anhand der Gesamtheit der Filteranteile zu ermitteln.

Die vorliegende Erfindung weist verschiedene Vorteile auf. Der wichtigste Vorteil besteht darin, dass mittels der vorliegenden Erfindung auch in den relativ häufigen Betriebspausen der Last 1 auf zuverlässige Weise der Gleichstromanteil IDC ermittelbar ist, ohne die elektrische Anlage vollständig vom Versorgungsnetz 4 trennen zu müssen.

Obwohl die Erfindung im Detail durch das bevorzugte Ausführungsbeispiel näher illustriert und beschrieben wurde, so ist die Erfindung nicht durch die offenbarten Beispiele eingeschränkt. Andere Varianten können vom Fachmann hieraus abgeleitet werden, ohne den Schutzumfang der Erfindung zu verlassen.

## Patentansprüche

1. Ermittlungsverfahren für einen Gleichstromanteil (IDC) eines in einem Wechselstrompfad (10) fließenden Gesamtstromes (I), der zusätzlich zum Gleichstromanteil (IDC) einen Wechselstromanteil aufweist,
- wobei der Wechselstrompfad (10) an ein Wechselspannungsnetz (7) angeschlossen ist, in dem mit einer Netzfrequenz eine Wechselspannung (U) oszilliert,
- in dem Wechselstrompfad (10) mindestens eine Drossel (11) angeordnet ist,
- wobei der mindestens einen Drossel (11) mindestens eine elektrische Speicherschaltung (13) in Reihe geschaltet ist,
- wobei die Speicherschaltung (13) mindestens einen Kondensator (14) und eine dem Kondensator (14) zugeordnete Schalteinrichtung (15) umfasst,
- wobei in einem Betriebszustand des Wechselstrompfades (10), in dem die Schalteinrichtung (15) derart angesteuert wird, dass ein Ladezustand des Kondensators (14) mit einem ganzzahligen Vielfachen der Netzfrequenz oszilliert, die über dem Kondensator (14) abfallende Spannung (UK) erfasst wird,
- wobei die erfasste Spannung (UK) mit mindestens einem ganzzahligen Vielfachen der Netzfrequenz gefiltert wird,
- wobei anhand der gefilterten Spannung (UK) der Gleichstromanteil (IDC) ermittelt wird und
- wobei anhand des ermittelten Gleichstromanteils (IDC) weitere Maßnahmen ergriffen werden.

2. Ermittlungsverfahren nach Anspruch 1,
**dadurch gekennzeichnet, dass** die weiteren Maßnahmen eine Anzeige des ermittelten Gleichstromanteils (IDC) und/oder einen Vergleich des ermittelten Gleichstromanteils (IDC) mit einem maximal zulässigen Gleichstromanteil (Imax) nebst Ausgabe einer Alarmmeldung und/oder Ergreifen einer Alarmreaktion bei Überschreiten des maximal zulässigen Gleichstromanteils (Imax) umfassen.

3. Ermittlungsverfahren nach Anspruch 2,
**dadurch gekennzeichnet, dass** eine Vorgabe eines Ermittlungsbefehls abgewartet wird und dass die Ausführung des Ermittlungsverfahrens erst durch die Vorgabe des Ermittlungsbefehls ausgelöst wird.

4. Ermittlungsverfahren nach Anspruch 2,
**dadurch gekennzeichnet, dass** überprüft wird, ob eine zeitlich instationäre Last (1) an das Wechselspannungsnetz (7) angeschlossen ist, und dass die Ausführung des Ermittlungsverfahrens ausgesetzt wird, solange die zeitlich instationäre Last (1) an das Wechselspannungsnetz (7) angeschlossen ist.

5. Ermittlungsverfahren nach Anspruch 1 oder 2,
**dadurch gekennzeichnet, dass** die weiteren Maßnahmen eine Speicherung des ermittelten Gleichstromanteils (IDC) als Gleichstromoffset (I0) umfassen und dass der gespeicherte Gleichstromoffset (I0) im Rahmen der Ermittlung einer Ansteuerung der Schalteinrichtung (15) berücksichtigt wird.

6. Ermittlungsverfahren nach Anspruch 5,
**dadurch gekennzeichnet, dass** eine Vorgabe eines Ermittlungsbefehls abgewartet wird, dass bei Vorgabe des Ermittlungsbefehls das Ermittlungsverfahren unter Berücksichtigung eines zuvor gespeicherten Gleichstromoffsets (I0) ausgeführt wird und dass ab dem Speichern des neu ermittelten Gleichstromoffsets (I0) der neu gespeicherte Gleichstromoffset (I0) im Rahmen der Ermittlung der Ansteuerung der Schalteinrichtung (15) verwendet wird.

7. Ermittlungsverfahren nach Anspruch 5,
**dadurch gekennzeichnet, dass** überprüft wird, ob eine zeitlich instationäre Last (1) an das Wechselspannungsnetz (7) angeschlossen ist, dass bei Trennen der zeitlich instationären Last (1) von dem Wechselspannungsnetz (7) das Ermittlungsverfahren unter Berücksichtigung eines zuvor gespeicherten Gleichstromoffsets (I0) ausgeführt wird und dass ab dem Speichern des neu ermittelten Gleichstromoffsets (I0) der neu gespeicherte Gleichstromoffset (I0) im Rahmen der Ermittlung der Ansteuerung der Schalteinrichtung (15) verwendet wird.

8. Computerprogramm, das Maschinencode (19) umfasst, der von einer Ermittlungseinrichtung (17) unmittelbar abarbeitbar ist und dessen Abarbeitung durch die Ermittlungseinrichtung (17) bewirkt, dass die Ermittlungseinrichtung (17) im Betrieb ein Ermittlungsverfahren mit allen Schritten eines Ermittlungsverfahrens nach einem der obigen Ansprüche ausführt.

9. Ermittlungseinrichtung,
**dadurch gekennzeichnet, dass** die Ermittlungseinrichtung derart programmiert ist, dass sie im Betrieb ein Ermittlungsverfahren mit allen Schritten eines Ermittlungsverfahrens nach einem der Ansprüche 1 bis 7 ausführt.
